# EUROPÄISCHE PATENTSCHRIFT

(11) **EP 1 511 143 B1**
(45) Veröffentlichungstag und Bekanntmachung des Hinweises auf die Patenterteilung: **10.06.2009**
(21) Anmeldenummer: 04017417.9
(22) Anmeldetag: 23.07.2004
(51) Int. Cl.: H02G 3/08

(54) **Elektrische Einbaudose**
Flush mounted electrical box
Boîte d'encastrement électrique

(30) Priorität: 25.08.2003 DE 10339341; 30.10.2003 DE 10350992
(43) Veröffentlichungstag der Anmeldung: 02.03.2005
(73) Patentinhaber: Günther Spelsberg GmbH, 58579 Schalksmühle (DE)
(72) Erfinder: Gerull, Walter, 58579 Schalksmühle (DE); Heins, Peter, 58566 Kierspe (DE); Leck, Volker, 58285 Gevelsberg (DE); Quardt, Dirk, 58509 Lüdenscheid (DE); Zborowski, Zbigniew, 58509 Lüdenscheid (DE)
(74) Vertreter: Michalski Hüttermann & Partner Patentanwälte

(56) Entgegenhaltungen:
- DE-A- 19 726 892
- DE-C- 10 228 255
- FR-A- 2 685 138

## Beschreibung

Die Erfindung betrifft eine elektrische Einbaudose gemäß dem Oberbegriff von Anspruch 1. Eine solche Dose ist aus der DE 1 079 715 B bekannt.

Elektrische Einbaudosen für den Betoneinbau stellen mit ihrem Aufnahmeraum eine Möglichkeit bereit, Einrichtungen, wie Leuchten, Lautsprecher oder andere elektrische Installationen, in einer Betonwand oder -decke unterzubringen. Dazu werden die Einbaudosen in nach außen hin völlig abgeschlossenem Zustand an der Schalung, insbesondere an einer Schalungswand befestigt, so daß nach Gießen der Wand oder Decke und Entfernen der Schalung der durch die Einbaudose gebildete Aufnahmeraum von außen her zugänglich ist. Dazu muß entweder ein Deckel von der Einbaudose entfernt werden, oder die dem durch die Decke oder Wand begrenzten Raum zugewandte Seite der Einbaudose muß ganz oder teilweise, z. B. durch Schneiden oder Herausbrechen, entfernt werden.

Aus dem Stand der Technik bekannte elektrische Einbaudosen für den Betoneinbau bestehen typischerweise aus wenigstens zwei Teilen. Diese Teile, häufig als Rückteil und Frontteil ausgebildet, haben unterschiedliche Aufgaben zu erfüllen, wie Fixierung der elektrischen Einbaudose in dem Beton, Bereitstellen von Befestigungsmöglichkeiten für hängende Deckenleuchten, Aufnahme von Rohren oder Schläuchen mit elektrischen Zuleitungen, Verschließen der Einbaudose für das Betongießen usw. Um unterschiedlichen Anforderungen zu genügen, werden von vielen Herstellern häufig Produktpaletten von elektrischen Einbaudosen für den Betonbau bereitgestellt, die jeweils eine Mehrzahl von Rück- und Frontteilen aufweisen, die miteinander kombinierbar sind. Dies ist sehr aufwendig, erfordert eine hohe Lagerhaltung und benötigt eine Vielzahl unterschiedlicher Werkzeuge für die Herstellung der Einbaudosen.

Aus der FR 2 685 138 A1 ist eine elektrische Einbaudose mit einem Aufnahmeraum für Einbaueinrichtungen bekannt, wobei ein Rückteil und ein Frontteil vorgesehen sind, die im zusammengefügten Zustand den Aufnahmeraum nach außen hin begrenzen, und wobei das Rückteil identisch zum Frontteil ausgebildet ist. Ferner beschreibt die DE 197 26 892 A1 eine Hohlkörper für die Betonbauinstallation, wobei der Hohlkörper einen hohen, im Querschnitt kreisförmig oder polygonal gestaltetes Basisteil aufweist, dessen einander diametral gegenüberliegende Öffnungen durch von einem Frontteil bzw. Rückteil gebildete Begrenzungswandungen verschließbar sind. Dabei ist insbesondere vorgesehen, daß das Frontteil und das Rückteil untereinander gleich gestaltet und dabei vertauschbar am Basisteil anbringbar sind. Ferner ist vorgesehen, dem Basisteil wenigstens einen Zwischenrahmen lösbar zuzuordnen. Durch die Verwendung eines solchen Zwischenrahmens kann der zur Unterbringung von elektrischen Einrichtungen zur Verfügung stehende Inneraum des Hohlkörper wesentlich vergrößert werden.

Ausgehend von der eingangs beschriebenen elektrischen Einbaudose ist es die Aufgabe der Erfindung, einen universellen Einbau bzw. eine universelle Anbringung von Einrichtungen an die elektrische Einbaudose zu gewährleisten.

Diese Aufgabe ist ausgehend von dieser elektrischen Einbaudose durch die Merkmale aus dem Kennzeichnen des Anspruchs 1 gelöst.

Damit ist folgende Vorgehensweise möglich: Nachdem z. B. eine Betondecke mit der erfindungsgemäßen elektrischen Einbaudose gefertigt worden ist, ist von dem durch die Decke begrenzten Raum her nur die Außenseite des Bodens des Frontteils sichtbar. Auf diesem kann nun mit Hilfe der Fixiereinrichtung eine Platte befestigt werden, die anschließend verputzt werden kann. Diese Platte sowie der Boden des Frontteils können dann an beliebiger Stelle unterhalb des Aufnahmeraums der Einbaudose geöffnet werden, nämlich z. B. durch Bohren, Schneiden oder Sägen, so daß der Ort der Öffnung und damit der Ort einer in dieser Öffnung zu installierenden Einrichtung, wie einer Leuchte, zumindest im Bereich des Aufnahmeraums variiert werden kann. Dies ist insbesondere dann vorteilhaft, wenn mehrere elektrische Einbaudosen z. B. in einer Reihe angeordnet werden sollen, um z. B. eine Lichtreihe zu bilden. Kommt es dabei bei zumindest einer der Einbaudosen zu einer Abweichung von einer geraden Linie, so kann dies durch ein Vorsehen einer Ausnehmung in der verputzbaren Platte etwas abweichend von z. B. der Mitte der Einbaudose korrigiert werden.

Als Einrichtung zur Fixierung der verputzbaren Platte sind viele Konstruktionen möglich. Gemäß einer bevorzugten Weiterbildung der Erfindung ist jedoch vorgesehen, daß die Einrichtung zur Fixierung einer verputzbaren Platte eine, vorzugsweise um 90° gewinkelte Fixierleiste aufweist. Weiterhin kann gemäß einer bevorzugten Weiterbildung der Erfindung vorgesehen sein, daß im Bereich der Ecke der Fixierleiste ein Dorn oder Stift ausgebildet ist, der bei auf die Dose aufgesetzter verputzbarer Platte in diese eindringt. Auf die Weise wird die Befestigung und Fixierung der verputzbaren Platte weiter verbessert. Eine zusätzliche Verbesserung bezüglich der Fixierung und Halterung der Platte kann gemäß einer bevorzugten Weiterbildung der Erfindung dadurch erzielt werden, daß die Fixierleiste mit einem Widerhaken zum Halten der auf die Dose aufgesetzten verputzbaren Platte versehen ist. Außerdem ist es auch möglich, die Fixierung und Halterung der Platte dadurch zu verbessern, daß die Fixierleiste innenseitig mit Lamellen versehen ist. Diese Lamellen sind flexibel und werden beim Einsetzen einer verputzbaren Platte verformt, so daß seitlich ein gewisser Druck auf die verputzbare Platte ausgeübt wird, was die Platte zwischen den Fixierleiste hält.

Grundsätzlich kann schon eine Fixierleiste zur Halterung der verputzbaren Platte genügen. Gemäß einer bevorzugten Weiterbildung der Erfindung ist jedoch vorgesehen, daß zwei, einander gegenüberliegende Fixierleisten vorgesehen sind. Insbesondere ist gemäß einer bevorzugten Weiterbildung der Erfindung vorgesehen, daß vier, vorzugsweise voneinander beabstandete Fixierleisten vorgesehen sind, die gemeinsam ein Rechteck, vorzugsweise ein Quadrat, einschließen.

Im einzelnen gibt es nun eine Vielzahl von weiteren Möglichkeiten, die erfindungsgemäßen elektrischen Einbaudosen auszugestalten und weiterzubilden. Dazu wird auf die den unabhängigen Patentansprüchen nachgeordneten Patentansprüche sowie auf die nachfolgende detaillierte Beschreibung bevorzugter Ausführungsbeispiele der Erfindung unter Bezugnahme auf die Zeichnung verwiesen. In der Zeichnung zeigt
- Fig. 1a: eine elektrische Einbaudose für den Betoneinbau gemäß einem ersten bevorzugten Ausführungsbeispiel der Erfindung mit Rückteil und Frontteil vor dem Zusammenfügen,
- Fig. 1b: die elektrische Einbaudose gemäß dem ersten bevorzugten Ausführungsbeispiel der Erfindung in zusammengefügtem Zustand und
- Fig. 2: eine elektrische Einbaudose für den Betoneinbau gemäß einem zweiten bevorzugten Ausführungsbeispiel der Erfindung.

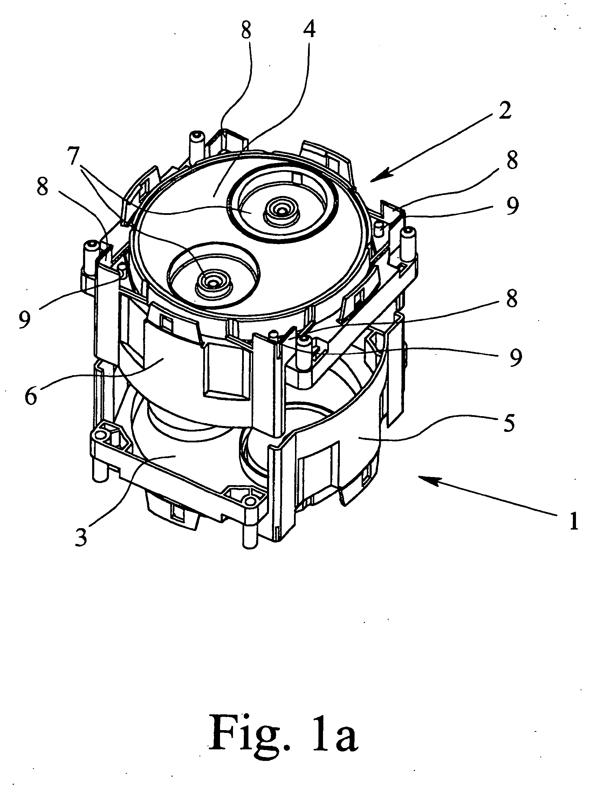

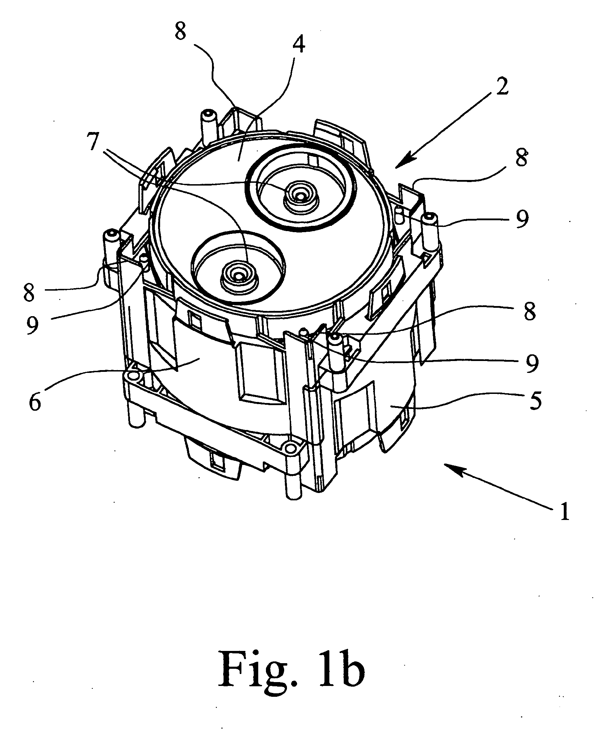

Aus den Fig. 1a und 1b ist eine elektrische Einbaudose für den Betoneinbau gemäß einem ersten bevorzugten Ausfühmgsbeispiel der Erfindung ersichtlich. Diese Einbaudose weist ein Rückteil 1 und ein Frontteil 2 auf, die sich derart zusammenfügen lassen, daß ein vollständig nach außen hin abgeschlossener Aufnahmeraum erzielt wird. Dazu weisen Rückteil 1 und Frontteil 2 jeweils einen Boden 3 bzw. 4 sowie Seitenwände 5 bzw. 6 auf.

Die Seitenwände 5 des Rückteils 1 sowie die Seitenwände 6 des Frontteils 2 liegen jeweils einander gegenüber. Insgesamt sind Rückteil 1 und Frontteil 2 identisch aufgebaut, wobei die Abstände zwischen den beiden Seitenwänden 5 des Rückteils 1 bzw. der beiden Seitenwände 6 des Frontteils 2 genau der Breite einer jeweiligen Seitenwand 5, 6 entsprechen, so daß sich Rückteil 1 und Frontteil 2 derart zusammenschieben lassen, daß die Seitenwände 5 des Rückteils 1 in die freien Seitenbereiche des Frontteils 2 und umgekehrt eingreifen. Mit anderen Worten sind die Seitenwände 5, 6 hier derart ausgebildet, daß sie über einen Winkelbereich von 90° verlaufen. Insgesamt wird damit, wie oben schon ausgeführt, ein vollständig von dem Außenbereich abgeschlossener Aufnahmeraum in der elektrischen Einbaudose erzielt.

Eine solche zusammengefügte elektrische Einbaudose gemäß dem ersten bevorzugten Ausführungsbeispiel der Erfindung kann nun mit Befestigungseinrichtungen, wie z. B. einer Magnethalterung, an einer Schalung befestigt werden, so daß das Betongießen erfolgen kann. Nach Entfernung der Schalung ist von dem durch die Betonwand oder die Betondecke begrenzten Raum aus nur noch der Boden 4 des Frontteils 2 zu sehen. Dieser schließt typischerweise im wesentlichen bündig mit der Wand bzw. der Decke ab oder ist gegenüber dieser leicht zurückgesetzt. Um nun den Aufnahmeraum zur Installation von elektrischen Einrichtungen, wie Leuchten oder Lautsprechern, nutzen zu können, muß der Boden 4 des Frontteils 2 zumindest teilweise geöffnet werden. Auf dem Boden 4 sind dazu insbesondere schon Einrichtungen 7 vorgesehen, die sich bei der Ausführung des Frontteils 2 aus Kunststoff z. B. mit einem Messer öffnen lassen. Anderseits kann natürlich der gesamte Boden 4 herausgeschnitten werden. Schließlich ist es auch möglich, im Boden 4 nur eine kleine Bohrung oder eine von ihrer Form her beliebige Öffnung vorzusehen.

Insbesondere ist bei der elektrischen Einbaudose gemäß dem vorliegend beschriebenen ersten bevorzugten Ausführungsbeispiel der Erfindung die Möglichkeit gegeben, die Dose auf einfache Weise mit einer verputzbaren Platte zu versehen. Dazu sind auf der Außenseite des Bodens 4 des Frontteils 2 Einrichtungen 8 zur Fixierung der verputzbaren Platte vorgesehen, nämlich um 90° gewinkelte Fixierleisten. Im Bereich der Ecken dieser Fixierleisten ist jeweils ein Stift 9 vorgesehen. Im übrigen können auf den Innenseiten dieser Fixierleisten auch nicht weiter dargestellte Lamellen vorgesehen sein, die die Fixierung der verputzbaren Platte weiter verbessern, wie weiter oben schon ausgeführt. Insgesamt weist die Einbaudose gemäß dem vorliegend beschriebenen ersten bevorzugten Ausführungsbeispiel der Erfindung vier solche Fixierleisten auf, die insgesamt ein Quadrat einschließen. Eine entsprechende quadratisch geformte verputzbare Platte kann, insbesondere nachdem der Boden 4 des Frontteils 2 vollständig entfernt worden ist, zwischen die Fixierleisten eingesetzt werden, wobei die Stifte 9 in die Platte eindringen und die Fixierung damit weiter verbessern. Die verputzbare Platte kann nun an beliebiger Stelle geöffnet werden, so daß z. B. zum Ausgleich einer leichten Fehlpositionierung der Einbaudose im Beton der Einbau einer elektrischen Einrichtung, wie einer Leuchte, an der richtigen Stelle erfolgen kann.

Bei der elektrischen Einbaudose gemäß dem ersten bevorzugten Ausführungsbeispiel der Erfindung kann grundsätzlich, wenn vorliegend auch nicht dargestellt, vorgesehen sein, daß die Seitenwände 5, 6 von Rückteil 1 bzw. Frontteil 2 mit jeweils wenigstens einer Sollbruchstelle versehen sind, um einen vorbestimmten Abschnitt der Wand herausbrechen zu können. Auf die Weise kann dann ein engeres Zusammenschieben von Frontteil 1 und Rückteil 2 erzielt werden, so daß im Ergebnis ein vom Volumen her geringerer Aufnahmeraum gebildet wird.

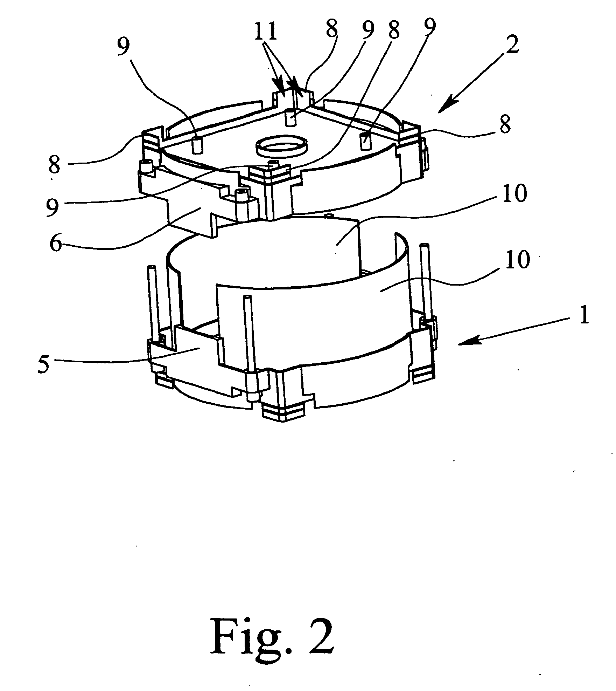

Aus Fig. 2 ist nun eine elektrische Einbaudose für den Betoneinbau gemäß einem zweiten bevorzugten Ausführungsbeispiel der Erfindung ersichtlich. Bei dieser Einbaudose sind ebenfalls ein Rückteil 1 und ein Frontteil 2 vorgesehen, die identisch ausgebildet sind. Allerdings sind nur kleinflächige Seitenwände 5 bzw. 6 vorgesehen, und die Verbindung zwischen Rückteil 1 und Frontteil 2 wird mittels einer Begrenzungswand 10 realisiert, die durch zwei Blechstreifen gebildet wird. Diese sind auf entsprechende Länge und Breite geschnitten und in jeweils eine Nut im Rückteil 1 bzw. Frontteil 2 eingesteckt. Auf diese Weise wird zusammen mit den Seitenwänden 5 und 6 ein vollständiger Abschluß des Aufnahmeraums der Einbaudose nach außen hin erzielt.

Die Verwendung von Blechstreifen als Begrenzungswand 10 ist in mehrfacher Hinsicht vorteilhaft: Insbesondere wenn in der elektrischen Einbaudose eine solche elektrische Einrichtung verwendet wird, die in vermehrtem Maße Wärme bei ihrem Betrieb abgibt, so kann diese Wärme mittels der Blechstreifen effektiv nach außen hin abgeleitet werden. Außerdem kann vorgesehen sein, daß die Seitenwände 5, 6 ebenfalls herausbrechbare Abschnitte aufweisen, so daß mit unterschiedlich breiten Blechstreifen verschiedene Abstände zwischen Rückteil 1 und Frontteil 2 und damit unterschiedlich große Volumina des Aufnahmeraums der elektrischen Einbaudose erzielt werden.

Lediglich der Vollständigkeit halber sei darauf hingewiesen, daß auch bei der elektrischen Einbaudose gemäß dem zweiten bevorzugten Ausführungsbeispiel der Erfindung Einrichtungen 8 zur Fixierung einer verputzbaren Platte in Form von um 90° gewinkelten Fixierleisten vorgesehen sind. Dabei sind die Stifte 9, die der zusätzlichen Fixierung der verputzbaren Platte dienen, im Gegensatz zu der Dose gemäß dem ersten bevorzugten Ausführungsbeispiel der Erfindung weiter von den Ecken der Fixierleisten entfernt. Außerdem sind im Innenbereich der Fixierleisten Widerhaken 10 vorgesehen, die die Befestigung und Fixierung einer verputzbaren Platte innerhalb der vier, insgesamt ein Quadrat bildenden Fixierleisten weiter verbessern.

## Patentansprüche

1. Elektrische Einbaudose, insbesondere für den Betoneinbau, mit einem Aufnahmeraum für Einbaueinnchtungen, wobei ein Rückteil (1) und ein Frontteil (2) mit jeweils einem Boden (3, 4) und einer Seitenwand (5, 6) vorgesehen sind, die im zusammengefügten Zustand den Aufnahmeraum nach außen hin begrenzen, und das Frontteil (2) auf der Außenseite seines Bodens (4) eine Einrichtung (8) zur Fixierung einer Platte aufweist, **dadurch gekennzeichnet, daß** die Einrichtung (8) zur Fixierung einer verputzbaren Platte vorgesehen ist.

2. Elektrische Einbaudose nach Anspruch 1, **dadurch gekennzeichnet, daß** die Einrichtung (8) zur Fixierung einer verputzbaren Platte eine, vorzugsweise um 90° gewinkelte Fixierleiste aufweist.

3. Elektrische Einbaudose nach Anspruch 2, **dadurch gekennzeichnet, daß** vier, vorzugsweise voneinander beabstandete Fixierleisten vorgesehen sind, die gemeinsam ein Rechteck, vorzugsweise ein Quadrat, einschließen.

4. Elektrische Einbaudose, nach einem der Ansprüche 1 bis 3, **dadurch gekennzeichnet, daß** das Rückteil (1) identisch zum Frontteil (2) ausgebildet ist.

5. Elektrische Einbaudose nach Anspruch 4, **dadurch gekennzeichnet, daß** das Rückteil (1) und das Frontteil (2) in einer ersten Orientierung zueinander den Aufnahmeraum vollständig nach außen hin begrenzen und in einer zweiten Orientierung zueinander zur vollständigen Begrenzung des Aufnahmeraums nach außen hin zusätzlich wenigstens eine zwischen das Rückteil (1) und das Frontteil (2) eingefügte Begrenzungswand (10) vorgesehen ist, wobei das Volumen des Aufnahmeraums im Fall der ersten Orientierung geringer ist als im Fall der zweiten Orientierung.

6. Elektrische Einbaudose nach Anspruch 5, **dadurch gekennzeichnet, daß** die zweite Orientierung aus der ersten Orientierung durch eine Drehung des Frontteils relativ zum Rückteil, vorzugsweise um 45°, 90° oder 180° erzielt wird.

## Claims

1. Electrical flush-mounted box, in particular for concrete installation, having an accommodation area for flush-mounted devices, with a rear part (1) and a front part (2) each having a bottom (3, 4) and a side wall (5, 6) being provided, which, in the joined-together state, bound the accommodation area on the outside, and the front part (2) has a device (8) for fixing a plate on the outside of its bottom (4)**, characterized in that** the device (8) is intended to be fixed to a plate which can be plastered.

2. Electrical flush-mounted box according to Claim 1, **characterized in that** the device (8) for fixing of a plate which can be plastered has a fixing strip which is preferably angled through 90°.

3. Electrical flush-mounted box according to Claim 2, **characterized in that** four fixing strips are provided, which are preferably separated from one another and together enclose a rectangle, preferably a square.

4. Electrical flush-mounted box according to one of Claims 1 to 3, **characterized in that** the rear part (1) is identical to the front part (2).

5. Electrical flush-mounted box according to Claim 4, **characterized in that** the rear part (1) and the front part (2) bound the accommodation area completely towards the outside in a first orientation with respect to one another, and in addition, at least one boundary wall (10), which is inserted between the rear part (1) and the front part (2), is provided in order to completely bound the accommodation area towards the outside, in a second orientation with respect to one another, with the volume of the accommodation area being less in the case of the first orientation than in the case of the second orientation.

6. Electrical flush-mounted box according to Claim 5, **characterized in that** the second orientation is reached from the first orientation by rotation of the front part relative to the rear part, preferably through 45°, 90° or 180°.

## Revendications

1. Boîte électrique encastrée, notamment pour un encastrement dans du béton, avec un espace de logement pour des dispositifs d'encastrement, une partie arrière (1) et une partie frontale (2) avec chacune un fond (3, 4) et une paroi latérale (5, 6) étant prévues, lesquelles délimitent à l'état assemblé l'espace de logement par rapport à l'extérieur, et la partie frontale (2) comportant sur le côté extérieur de son fond (4) un dispositif (8) pour fixer une plaque, **caractérisée en ce que** le dispositif (8) est prévu pour la fixation d'une plaque pouvant être enduite.

2. Boîte électrique encastrée selon la revendication 1, **caractérisée en ce que** le dispositif (8) pour la fixation d'une plaque pouvant être enduite comporte une baguette de fixation coudée à 90° de préférence.

3. Boîte électrique encastrée selon la revendication 2, **caractérisée en ce qu'**il est prévu quatre baguettes de fixation, de préférence à une certaine distance les unes des autres, qui forment ensemble un rectangle, de préférence un carré.

4. Boîte électrique encastrée selon l'une des revendications 1 à 3, **caractérisée en ce que** la partie arrière (1) est conçue de manière identique à la partie frontale (2).

5. Boîte électrique encastrée selon la revendication 4, **caractérisée en ce que,** dans une première orientation l'une par rapport à l'autre, la partie arrière (1) et la partie frontale (2) délimitent complètement l'espace de logement par rapport à l'extérieur et **en ce que**, dans une deuxième orientation l'une par rapport à l'autre, il est prévu en plus au moins une paroi de délimitation (10) insérée entre la partie arrière (1) et la partie frontale (2) pour délimiter complètement l'espace de logement par rapport à l'extérieur, le volume de l'espace de logement existant dans le cas de la première orientation étant inférieur à celui existant dans le cas de la deuxième orientation.

6. Boîte électrique encastrée selon la revendication 5, **caractérisée en ce que** la deuxième orientation est atteinte à partir de la première orientation par une rotation de la partie frontale par rapport à la partie arrière, de préférence de 45°, 90° ou 180°.
